# EUROPÄISCHE PATENTSCHRIFT

(11) **EP 2 104 969 B1**
(45) Veröffentlichungstag und Bekanntmachung des Hinweises auf die Patenterteilung: **07.07.2010**
(21) Anmeldenummer: 07847006.9
(22) Anmeldetag: 06.12.2007
(51) Int. Cl.: H02B 13/035

(54) **HOCHSPANNUNGSSCHALTANLAGE**
HIGH-VOLTAGE SWITCHGEAR
INSTALLATION DE DISTRIBUTION ÉLECTRIQUE HAUTE TENSION

(30) Priorität: 29.12.2006 DE 102006062540
(43) Veröffentlichungstag der Anmeldung: 30.09.2009
(73) Patentinhaber: ABB Technology AG, 8050 Zürich (CH)
(72) Erfinder: HOLAUS, Walter, CH-8045 Zürich (CH); CHAUHAN, Kalpesh, Gujarat 390 019 (IN); SAXL, David, CH-8046 Zürich (CH)
(74) Vertreter: Miller, Toivo
(86) Internationale Anmeldenummer: PCT/EP2007/010576
(87) Internationale Veröffentlichungsnummer: WO 2008/080498

(56) Entgegenhaltungen:
- EP-A- 1 249 910

## Beschreibung

Die Erfindung betrifft eine Hochspannungsschaltanlage nach dem Oberbegriff des Anspruches 1.

Hochspannungsschaltanlagen der eingangs genannten art sind normalerweise als metallgekapselte, SF6-gasisolierte Schaltanlagen ausgebildet, mit einem aus einer der Anzahl der Phasen entsprechenden Anzahl von Leistungsschalterpolen aufgebauten Leistungsschalter, mit wenigstens einem Trennschalter und/oder Trennerdungsschalter mit einer der Anzahl der Phasen entsprechenden Anzahl von Trennschalterpolen und/oder Trennerdungsschalterpolen sowie weitere Komponenten, die hier weniger von Bedeutung sind. Die Hochspannungsschaltanlagen können einphasig oder mehrphasig gekapselt sein; bei einphasiger Kapselung befindet sich in einem Kapselungsgehäuse nur jeweils ein Pol; bei mehrphasiger Kapselung ist eine der Anzahl der Phasen entsprechende Anzahl von Polen in einem Kapselungsgehäuse untergebracht.

In üblicher Bauweise sind die Leistungsschalterpole, die als gasbeblasene Schalter ausgebildet sind, vertikal im Kapselungsgehäuse untergebracht, wobei sie z.B. bei der von ABB vertriebenen Schaltanlage EXK in einer vertikal verlaufenden Ebene nebeneinander angeordnet sind. Die Sammelschienen schließen übereinander angeordnet auf einer Seite des Kapselungsgehäuses zusammen mit Sammelschienentrennschaltern an diesem an; die Trennschalter bzw. Trennerdungsschalter befinden sich diametral gegenüber auf der anderen Seite des Kapselungsgehäuses, wodurch ein bestimmter Platzbedarf erforderlich wird. Die Verbindungsleiter zwischen den Leistungsschalterpolen und den Sammelschienen sind in dem Kapselungsgehäuse untergebracht, in dem sich auch die Leistungsschalterpole befinden. Eine Trennung der Kapselung der Sammelschienen bzw. der Trennschalter und den Leistungsschalterpolen erfolgt mittels Schottisolatoren, die hier als dreiphasige Schottisolatoren ausgebildet und von drei Leitern durchgriffen sind.

Entsprechende Bauweisen finden sich auch bei Schaltanlagen anderer Hersteller.

Aufgrund ihrer Konstruktion und Zuordnung der Sammelschienentrennschalter zu dem Kapselungsgehäuse des Leistungsschalters ist dann, wenn der Isolator des Sammelschienentrennschalters geöffnet werden muss, z.B. anlässlich einer Revision, auch der Gasraum des Leistungsschalters zu öffnen. Das gleiche gilt auch für den Fall, wenn ein größerer Fehler am Leistungsschalter zu beheben ist, dann auch der Gasraum des oder der Sammelschienentrennschalter geöffnet werden muss bzw. müssen.

Im Mittelspannungsbereich werden als Leistungsschalter Vakuumkammern verwendet, die horizontal nebeneinander angeordnet sein können, siehe z.B. die von ABB vertriebene Mittelspannungsschaltanlage ZX2. Vakuumkammern werden im sogenannten Hochspannungsbereich, der in einem Spannungsbereich > 72 kV liegt, nicht verwendet.

Aufgabe der Erfindung ist es, eine Hochspannungsschaltanlage zu schaffen, bei der die horizontale Breite gegenüber den bekannten Schaltanlagen deutlich reduziert ist.

Diese Aufgabe wird erfindungsgemäß gelöst mit den Merkmalen des Anspruches 1.

Erfindungsgemäß sind die Schalterpole (wenn im folgenden von Schalterpolen die Rede ist, sind dabei Leistungsschalterpole gemeint; wenn von Trennschalterpolen die Rede ist, sind darunter Sammelschienentrennschalter- und -trennerderschalterpole zu verstehen) aller Phasen übereinander in einem Kapselungsgehäuse untergebracht. Weiterhin sind die Trennschalterpole ebenfalls übereinander und oberhalb der Schalterpole angeordnet, und zwischen den Schalterpolen und den Trennschalterpolen ist eine Verbindungsleiteranordnung vorgesehen, die mit einem Ende seitlich an dem Kapselungsgehäuse angeschlossen ist und an deren anderem Ende die Trennschalterpole angeschlossen sind.

Mit der Übereinanderordnung der Schalterpole und der Trennschalterpole jedes Sammelschienentrennschalters ist es möglich, die Verbindungsleiteranordnung seitlich neben dem Kapselungsgehäuse anzubringen, so dass die horizontale Breite der Schaltanlage im wesentlichen durch die horizontale Breite des Kapselungsgehäuses und der Verbindungsleiteranordnung bestimmt ist.

Eine vorteilhafte Ausgestaltung der Erfindung ist darin zu sehen, dass die Verbindungsleiteranordnung ein wenigstens einteiliges Gehäuse umfasst, in dem die Verbindungsleiter untergebracht sind und das als eigene Kapselung ausgebildet ist. Das innerhalb dieses Gehäuses befindliche Isoliergas ist von dem Isoliergas der anderen Kapselungsräume mittels Schottisolatoren gasdicht getrennt.

Erfindungsgemäß ist die Verbindungsleiteranordnung ein von den anderen Gasräumen getrenntes Verbindungsmodul, welches als separater Gasraum ausgebildet wird oder wenigstens ausgebildet werden kann, bei dem die Isolatoren für jeweils einen Anschluss zum Kapselungsgehäuse und zum wenigstens einen Sammelschienentrennschalter übereinander liegend und ebenfalls in einer Ebene liegend angeordnet sind.

Mit der erfindungsgemäßen Anordnung, d.h. mit der Ausführung als Verbindungsmodul, ist es möglich, die horizontale Breite, die bei den bekannten Schaltanlagen i.a. 800 mm beträgt, auf 600 mm zu verringern.

Weitere vorteilhafte Ausgestaltungen und Verbesserungen der Erfindung ergeben sich aus den weiteren Unteransprüchen.

Anhand der Zeichnung, in der ein Ausführungsbeispiel der Erfindung schematisch dargestellt ist, sollen die Erfindung sowie weitere vorteilhafte Ausgestaltungen und weitere Vorteile näher erläutert und beschrieben werden.

Es zeigen:
- Fig. 1: eine Seitenansicht einer erfindungsgemäßen Schaltanlage und
- Fig. 2: eine Ansicht der Verbindungsleiteranordnung nach der Fig. 1 gemäß Pfeil- richtung "I" der Fig. 1, mit einem Trennbereich des Leistungsschalters.

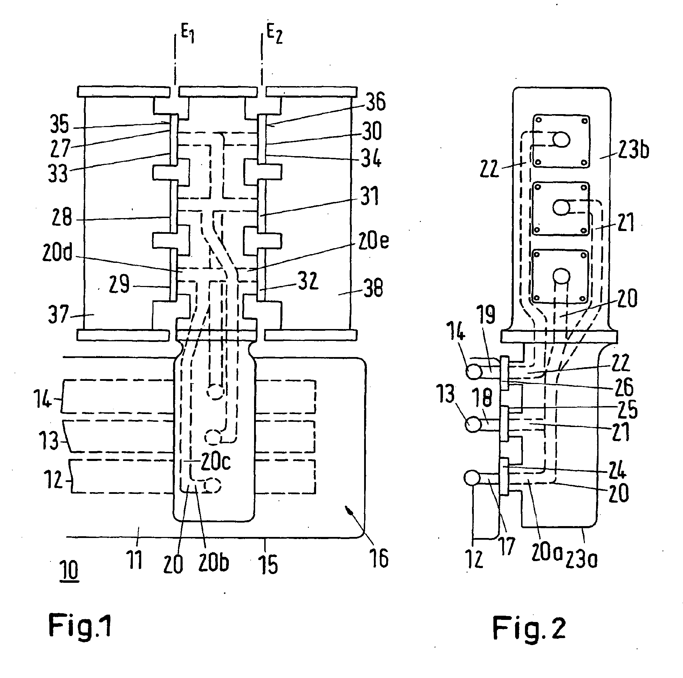

Es sei Bezug genommen auf Fig. 1.

Eine metallgekapselte, gasisolierte, insbesondere SF6-gasisolierte Hochspannungsanlage 10 umfasst einen Hochspannungsleistungsschalter 11 mit drei Leistungsschalterpolen 12, 13, 14, kurz Schalterpole genannt, die innerhalb eines Kapselungsgehäuses 15 horizontal verlaufend übereinander angeordnet sind. Damit liegen die Längsachsen der Schalterpole 12, 13, 14 in einer Ebene, die parallel zur Zeichenebene verläuft; bei einer in Betrieb befindlichen Schaltanlage verläuft diese Ebene vertikal. Damit ist das Kapselungsgehäuse 15 oval mit vertikal verlaufenden Breitseiten, von denen nur die dem Betrachter zugewandten Breitseite 16 sichtbar ist.

Von den einzelnen Schalterpolen 12, 13, 14 aus verlaufen Abgangsleiter 17, 18, 19 senkrecht zur Breitseite 16 bzw. zur vertikalen Ebene, in der die Schalterpole 12, 13, 14 liegen und enden dort in einem nicht näher dargestellten Übergangsstück, mit dem sie mit Verbindungsleitern 20, 21, 22 innerhalb eines hier zweigeteilten Verbindungsleitergehäuses 23 verbunden sind. Das Verbindungsleitergehäuse 23, das aus zwei miteinander verbundenen Gehäuseteilen 23a, 23b zusammengesetzt ist, besitzt Flansche 24, 25, 26, mit denen das Verbindungsleitergehäuse 23, hier das Gehäuseteil 23a, seitlich an der Breitseite 16 des Kapselungsgehäuses 15 befestigt ist. Die Art der Befestigung ist hier von geringer Bedeutung.

Das Gehäuseteil 23a ist ebenso wie das Gehäuseteil 23b langgestreckt ausgebildet und verläuft mit seiner Längserstreckung vertikal, senkrecht zu den Mittelachsen der Schalterpole 12, 13, 14 und parallel zur Ebene der Mittelachse der Schalterpole 12, 13, 14. Die horizontale Breite des Gehäuseteils 23a und die horizontale Breite des Kapselungsgehäuses 15 bestimmen die Breite der Schaltanlage, gemessen senkrecht zur Zeichenebene der Fig. 1.

Das Verbindungsleitergehäuse 23 überragt nach oben das Kapselungsgehäuse 15 und besitzt beidseitig in je einer Ebene E1 und E2 vertikal übereinanderliegende Flansche 27, 28, 29; 30, 31, 32, die paarweise an entgegengesetzt liegenden Seiten des Gehäuseteiles 23b miteinander fluchten. Die Ebenen E1 und E2 verlaufen vertikal und senkrecht zu der Ebene, in der sich die Mittelachsen der Schalterpole 12, 13, 14 befinden. An diesen Flanschen ist unter Zwischenfügung je eines Schottisolators 33, 34 (hier sind nur die Schottisolatoren der Flansche 27 und 30 bezeichnet; bei den anderen Flanschen sind gleiche Isolatoren vorgesehen) je ein Anschlussflansch 35, 36 (auch hier sind nur diejenigen der Flansche 27, 30 mit einer Bezugsziffer versehen) eines Trennschaltergehäuses 37, 38 für je einen Sammelschienentrennschalter angeflanscht, in denen sich nicht gezeichnete Trennschalterpole befinden, die übereinander angeordnet sind und in einer Ebene liegen, die parallel zur Ebene der Mittelachse der Schalterpole 12, 13, 14 verläuft.

In der Fig. 1 sind zwei Trennschaltergehäuse dargestellt; natürlich könnte auch nur ein Trennschaltergehäuse 27 oder 38 vorhanden sein, je nach Anzahl der anzuschließenden Sammelschienen. Bei einer Einfachsammelschiene wäre nur der Trennschalter (in der Zeichnung) links oder derjenige rechts vorzusehen; bei einer Doppelsammelschienenanordnung wären beide Trennschalter einzusetzen bzw. beide Trennschaltergehäuse.

Die Verbindungsleiter 20, 21, 22 sind innerhalb des Verbindungsleitergehäuses 23 so geführt, dass ausreichende Abstände zu Verbindungsleitern der anderen Phasen gewährleistet sind. So verläuft der Verbindungsleiter 20 vom Flansch 24 aus in einem ersten Abschnitt 20a zunächst horizontal und senkrecht zur Breitseite 16 und danach über einen ebenfalls horizontal verlaufenden zweiten Abschnitt 20b parallel zur Breitseite 16, so dass er mit seinem vertikal nach oben bis in die Höhe der Flansche 29, 32 verlaufenden dritten Abschnitt 20c an den Verbindungsleitern 21, 22 vorbei geführt wird. An seinem oberen Ende verläuft der Verbindungsleiter 20 in einem vierten Abschnitt zum Flansch 29 oder 32 oder über ein T-Stück zu beiden Flanschen. Der Verbindungsleiter 21 verläuft ähnlich wie der Verbindungsleiter 20 etwa vertikal nach oben und führt entweder zum Flansch 28 oder 31 oder zu beiden. Der Verbindungsleiter 22 verbindet den Schalterpol 14 mit dem Flansch 27 oder 30 oder mit beiden. Im Detail wird die Form der Verbindungsleiter 21, 22 nicht näher beschrieben. Wichtig ist nur, dass alle Verbindungsleiter 20, 21, 22 im wesentlichen parallel zu Ebene der Mittelachse der Schalterpole 12, 13, 14 vertikal nach oben verlaufen und ausreichende Abstände zu den Verbindungsleitern der jeweils anderen Phasen gewährleistet sind.

Die Isolatoren (hier ohne Bezugszeichen), die sich im Bereich der Flansche 24, 25, 26 und der Flansche 27, 28 ... befinden, sind Schottisolatoren, wie sie für eine einphasige Kapselung eingesetzt werden. Eingangs bei der Darstellung des Standes der Technik ist darauf hingewiesen worden, dass die Isolatoren z.B. zwischen den Sammelschienen und dem Kapselungsgehäuse sogenannte dreiphasige Isolatoren sind, die von drei Phasenleitern durchgriffen sind. Es liegt auf der Hand, dass die Herstellung derartiger dreiphasiger Isolatoren, insbesondere wenn sie der Abschottung der Kapselungsräume dienen, aufwendig in der Herstellung sind, weil die Durchführung der drei Verbindungsleiter in einem Isolator geeignete Abdichtungen erfordert. Die Verwendung eines Schottisolators für eine einphasige Kapselung vereinfacht den Aufbau und die Herstellung einer Schaltanlage erheblich.

Der Vorteil der Erfindung besteht nun darin, dass die Verbindungsleiter zwischen den Schalterpolen des Leistungsschalters und den Sammelschienentrennschaltern oder allgemein zu den Sammelschienen innerhalb des Verbindungsleitergehäuses untergebracht sind. Dieses Verbindungsleitergehäuse ist somit als Verbindungsmodul ausgeführt, welches eine Gasraumtrennung zwischen dem Gasraum der Sammelschienen oder der Sammelschienentrennschaltern und dem Gasraum des Leistungsschalters erzeugt, so dass z.B. eine Öffnung des Gasraumes des Leistungsschalters nicht zu einer Öffnung des Gasraumes des Sammelschienentrenners oder der Sammelschiene führt.

In der Beschreibung des Ausführungsbeispieles ist dargestellt, dass sich oberhalb des Leistungsschalters Sammelschienentrennschalter mit Sammelschienen (nicht näher dargestellt) befinden. Es könnte auch denkbar sei, dass der obere Abschnitt der Verbindungsleiteranordnung oder des Verbindungsmoduls direkt an einer Sammelschiene oder zweien angeschlossen ist.

## Patentansprüche

1. Mehrphasige, vorzugsweise metallgekapselte, gasisolierte Hochspannungsschaltanlage mit einem Hochspannungsleistungsschalter mit je einem Schalterpol pro Phase und wenigstens je einem Sammelschienentrennschalter mit einem Trennschalterpol pro Phase, **dadurch gekennzeichnet, dass** die Schalterpole (12, 13, 14) aller Phasen in einer vertikal verlaufenden Ebene übereinander in einem Kapselungsgehäuse (15) untergebracht sind, dass die Trennschalterpole je eines Sammelschienentrennschalters oberhalb der Schalterpole (12, 13, 14) ebenfalls übereinander angeordnet sind und dass eine Verbindungsleiteranordnung (20 ,21, 22; 23) vorgesehen ist, die mit einem Ende an dem Kapselungsgehäuse (15) an dessen Breitseite (16) anschließt und mit ihrem anderen Ende mit wenigstens einem Sammelschienentrennschalter verbunden ist.

2. Schaltanlage nach Anspruch 1, **dadurch gekennzeichnet, dass** die Verbindungsleiteranordnung (20, 21, 22; 23) ein wenigstens einteiliges Verbindungsleitergehäuse (23) aufweist, in dem die Verbindungsleiter (20, 21, 22) untergebracht sind.

3. Schaltanlage nach Anspruch 2, **dadurch gekennzeichnet, dass** das Verbindungsleitergehäuse (23) etwa langgestreckt rechteckig ausgebildet ist und seitlich zu dem Verbindungsleitergehäuse (25) vertikal verläuft und das Kapselungsgehäuse (15) vertikal nach oben überragt, so dass an dem oberhalb des Kapselungsgehäuses befindlichen Verbindungsleitergehäuseabschnitt der wenigstens eine Sammelschienentrennschalter anschließbar und angeschlossen ist.

4. Schaltanlage nach einem der vorigen Ansprüche, **dadurch gekennzeichnet, dass** die Verbindungsleiteranordnung (20, 21, 22; 23) ein Verbindungsmodul ist, das einen unabhängigen Gasraum aufweist, so dass eine Öffnung des Gasraumes des Leistungsschalters nicht zu einer Öffnung des wenigstens einen Sammelschienentrennschalterraumes führt.

5. Schaltanlage nach einem der vorigen Ansprüche, **dadurch gekennzeichnet, dass** an den Flanschverbindungen zwischen dem Kapselungsgehäuse (15) und dem Verbindungsleitergehäuse (23) je ein in einer Ebene, die parallel zur Ebene der Mittelachse der Schalterpole (12, 13, 14) verläuft, liegender Trag- oder Schottisolator vorgesehen ist.

6. Schaltanlage nach einem der vorigen Ansprüche, **dadurch gekennzeichnet, dass** an den Flanschverbindungen des Verbindungsleitergehäuses (23) zu den Trennschalterpolen jedes Sammelschienentrennschalters wenigstens je ein Schottisolator vorgesehen ist, von denen die phasenweise zueinander gehörigen Isolatoren ebenfalls in einer Ebene liegen, die vertikal und senkrecht zur Ebene der Mittelachse der Schalterpole (12, 13, 14) verläuft.

7. Schaltanlage nach einem der Ansprüche 5 oder 6, **dadurch gekennzeichnet, dass** die Isolatoren solche für eine einphasige Kapselung sind und nur von einem Verbindungs- oder Anschlussleiter durchgriffen sind.

8. Schaltanlage nach einem der vorigen Ansprüche, **dadurch gekennzeichnet, dass** an dem oberhalb des Kapselungsgehäuses (15) befindlichen Abschnitt des Verbindungsleitergehäuses (23) lediglich ein Trennschalter mit einer der Anzahl der Phasen entsprechenden Anzahl von Trennschalterpolen auf einer Seite oder auf der anderen Seite oder auf beiden Seiten gegenüber liegend angeordnet sind, wobei die Mittelachse der phasenweise zusammengehörigen Isolatoren miteinander fluchten und in einer Ebene liegen, die parallel zur Ebene der Mittelachse der Schalterpole (12, 13, 14) verläuft.

## Claims

1. A multi-phase, preferably metal-encapsulated, gas-insulated high-voltage switchgear, comprising a high-voltage circuit breaker with one switch pole per phase and at least one busbar disconnector with one disconnector pole per phase, **characterized in that** the switch poles (12, 13, 14) of all phases are accommodated one above the other in a vertically extending plane in an enclosing housing (15), the disconnector poles of a busbar disconnector are also arranged one above the other above the switch poles (12, 13, 14), and a connection conductor arrangement (20, 21, 22; 23) is provided where one end thereof is connected with the enclosing housing (15) at its broad side (16) and with its other end with at least one busbar disconnector.

2. A switchgear according to claim 1, **characterized in that** the connection conductor arrangement (20, 21, 22; 23) comprises at least one integral connection conductor housing (23) in which the connection conductors (20, 21, 22) are accommodated.

3. A switchgear according to claim 2, **characterized in that** the connection conductor housing (23) is arranged in an elongated rectangular way and extends laterally vertical to the connection conductor housing (25) and projects vertically beyond the enclosing housing (15), so that the at least one busbar disconnector can be connected and is connected at the connection conductor housing section disposed above the enclosing housing.

4. A switchgear according to one of the preceding claims, **characterized in that** the connection conductor arrangement (20, 21, 22; 23) is a connection module which comprises an independent gas chamber, so that an opening of the gas chamber of the circuit breaker does not lead to an opening of at least one busbar disconnector space.

5. A switchgear according to one of the preceding claims, **characterized in that** one support or compartment insulator is provided at the flange connections between the enclosing housing (15) and the connection conductor housing (23), which insulator lies in a plane which extends parallel to the plane of the central axis of the switch poles (12, 13, 14).

6. A switchgear according to one of the preceding claims, **characterized in that** the at least one compartment insulator is provided at the flange connections of the connection conductor housing (23) to the disconnector switch poles of each busbar disconnector, of which the insulators which belong to one another in phases are also disposed in a plane which extends vertically and perpendicularly to the plane of the central axis of the switch poles (12, 13, 14).

7. A switchgear according to one of the claims 5 or 6, **characterized in that** the insulators are such for single-phase encapsulation and are penetrated by an interconnection or connecting lead.

8. A switchgear according to one of the preceding claims, **characterized in that** merely one disconnector with a number of disconnector poles corresponding to the number of phases is arranged on one side or on the other side or on both sides disposed opposite of one another at the section of the connection conductor housing (23) disposed above the enclosing housing (15), with the central axis of the insulators belonging together in phases being in alignment with each other and being disposed in a plane which extends parallel to the plane of the central axis of the switch poles (12, 13, 14).

## Revendications

1. Installation de commutation multiphase haute tension isolée au gaz, de préférence avec encapsulation métallique, avec un disjoncteur de puissance à haute tension possédant un pôle de disjoncteur par phase et au moins un sectionneur de barre collectrice avec un pôle de sectionneur par phase, **caractérisée en ce que** les pôles de commutateur (12, 13, 14) de toutes les phases sont logés les uns au-dessus des autres dans un plan vertical dans un boîtier d'encapsulation (15), **en ce que** les pôles de sectionneur de chaque sectionneur de barre collectrice sont également disposés les uns au-dessus des autres au-dessus des pôles de disjoncteur (12, 13, 14) et **en ce qu'**il est prévu une disposition de conducteurs de liaison (20, 21, 22 ; 23) qui se raccorde à une extrémité au boîtier d'encapsulation (15) sur le côté large (16) de celui-ci et à l'autre extrémité à au moins un sectionneur de barre collectrice.

2. Installation de commutation selon la revendication 1, **caractérisée en ce que** la disposition de conducteurs de liaison (20, 21, 22 ; 23) présente un boîtier des conducteurs de liaison (23) en au moins une partie, dans lequel sont logés les conducteurs de liaison (20, 21, 22).

3. Installation de commutation selon la revendication 2, **caractérisée en ce que** le boîtier des conducteurs de liaison (23) est en forme approximative de rectangle allongé et s'étend verticalement sur le côté du boîtier des conducteurs de liaison (25) et le boîtier d'encapsulation (15) dépasse verticalement vers le haut, de sorte que l'au moins un sectionneur de barre collectrice peut être raccordé et est raccordé à la partie du boîtier des conducteurs de liaison qui se trouve au-dessus du boîtier d'encapsulation.

4. Installation de commutation selon l'une des revendications précédentes, **caractérisée en ce que** la disposition de conducteurs de liaison (20, 21, 22 ; 23) est un module de liaison qui présente un compartiment de gaz indépendant, de sorte qu'une ouverture du compartiment de gaz du disjoncteur de puissance n'entraîne pas l'ouverture de l'au moins un compartiment du sectionneur de barre conductrice.

5. Installation de commutation selon l'une des revendications précédentes, **caractérisée en ce qu'**un isolateur de support ou de cloisonnement est prévu sur les assemblages par bride entre le boîtier d'encapsulation (15) et le boîtier des conducteurs de liaison (23) dans chaque plan parallèle au plan de l'axe médian des pôles de disjoncteur (12, 13, 14).

6. Installation de commutation selon l'une des revendications précédentes, **caractérisée en ce qu'**est prévu sur les assemblages par bride des boîtier des conducteurs de liaisons (23) avec les pôles des sectionneurs de chaque sectionneur de barre collectrice au moins un isolateur de cloisonnement dont les isolateurs associés l'un à l'autre par la phase se trouvent également dans un plan vertical et perpendiculaire à l'axe médian des pôles de disjoncteur (12, 13, 14).

7. Installation de commutation selon l'une des revendications 5 ou 6, **caractérisée en ce que** les isolateurs sont des isolateurs pour encapsulation monophasée et ne sont traversés que par un conducteur de liaison ou de raccordement.

8. Installation de commutation selon l'une des revendications précédentes, **caractérisée en ce qu'**il est prévu sur la partie du boîtier des conducteurs de liaison (23) située au-dessus du boîtier d'encapsulation (15) un seul sectionneur avec un nombre de pôles de sectionneur correspondant au nombre de phase sur un côté ou sur l'autre côté ou face à face sur les deux côtés, les axes médians des isolateurs associés l'un à l'autre par la phase étant alignés et se trouvant dans un plan parallèle au plan de l'axe médian des pôles de disjoncteur (12, 13, 14).
